# EUROPÄISCHE PATENTSCHRIFT

(11) **EP 2 024 209 B1**
(45) Veröffentlichungstag und Bekanntmachung des Hinweises auf die Patenterteilung: **27.04.2011**
(21) Anmeldenummer: 08758732.5
(22) Anmeldetag: 23.05.2008
(51) Int. Cl.: B60T 10/02, F16D 57/04

(54) **VERFAHREN ZUM STEUERN EINER HYDRODYNAMISCHEN BREMSE**
METHOD FOR CONTROLLING A HYDRODYNAMIC BRAKE
PROCÉDÉ POUR COMMANDER UN FREIN HYDRODYNAMIQUE

(30) Priorität: 25.05.2007 DE 102007024698
(43) Veröffentlichungstag der Anmeldung: 18.02.2009
(73) Patentinhaber: Voith Patent GmbH, 89522 Heidenheim (DE)
(72) Erfinder: HERDERICH, Uwe, 74594 Kressberg (DE)
(74) Vertreter: Weitzel, Wolfgang
(86) Internationale Anmeldenummer: PCT/EP2008/004139
(87) Internationale Veröffentlichungsnummer: WO 2008/145315

(56) Entgegenhaltungen:
- DE-A1- 19 927 397
- US-A- 5 107 725

## Beschreibung

Die vorliegende Erfindung betrifft ein Verfahren zum Steuern einer hydrodynamischen Bremse in einem Kraftfahrzeug mit einem Antriebsmotor.

Es ist bekannt, Kraftfahrzeuge, insbesondere Nutzfahrzeuge, mit hydrodynamischen Bremsen auszustatten, um das Fahrzeug verschleißfrei abzubremsen. Solche hydrodynamischen Bremsen, die auch als hydrodynamischer Retarder bezeichnet werden, umfassen einen beschaufelten Rotor und einen beschaufelten Stator, die miteinander einen torusförmigen Arbeitsraum ausbilden, in welchen ein Arbeitsmedium einfüllbar ist, um über einen Strömungskreislauf des Arbeitsmediums im Arbeitsraum Drehmoment vom Rotor auf den Stator zu übertragen und damit ein Bremsmoment auf den Rotor auszuüben. Alternativ kann anstelle des Stators auch ein zweiter Rotor, sogenannter Gegenlaufrotor, vorgesehen sein, welcher in eine entgegengesetzte Drehrichtung wie der erste Rotor umläuft. Die zuletzt beschriebene Ausführungsform ist auch als Gegenlaufretarder bekannt.

Die Offenlegungsschrift DE 199 27 397 A1 beschreibt einen hydrodynamischen Retarder, der über eine selbstverstärkende Reibkupplung in eine Triebverbindung und aus dieser heraus mit einem Fahrzeuggetriebe schaltbar ist. Die Reibkupplung ist dabei derart dimensioniert, dass das Zuschalten des Retarders auch im nicht entleerten Zustand erfolgen kann. Hierdurch werden besonders kurze Ansprechzeiten des Retarders ermöglicht.

Insbesondere bei hydrodynamischen Bremsen einer großen Leistungsklasse führt die vorgeschlagene Lösung zu erheblichen Schaltstößen und verlangt eine verhältnismäßig große und schwere Kupplung zwischen der hydrodynamischen Maschine und dem Getriebe, um das beim Zuschalten am Rotor der hydrodynamischen Bremse anliegende Bremsmoment beherrschen zu können. Dies ist im Hinblick auf die heutzutage geforderte Gewichtseinsparung in Kraftfahrzeugen nachteilig, da mit jedem zusätzlichen Gewicht der Kraftstoffverbrauch des Kraftfahrzeugs erhöht wird und somit auch die Emissionen je gefahrenem Kilometer vergrößert werden.

Der Erfindung liegt die Aufgabe zugrunde, ein Verfahren zum Steuern einer hydrodynamischen Bremse anzugeben, mit welchem ausreichend kurze Reaktionszeiten der hydrodynamischen Bremse erreicht werden, bei zugleich minimierten Leerlaufverlusten im Nichtbremsbetrieb, ohne dass eine schwere Trennkupplung zum Zuschalten der hydrodynamischen Bremse erforderlich ist.

Die erfindungsgemäße Aufgabe wird durch ein Verfahren gemäß den unabhängigen Ansprüchen gelöst. Die abhängigen Ansprüche beschreiben besonders vorteilhafte und zweckmäßige Ausgestaltungen der Erfindung.

Mit dem erfindungsgemäßen Steuerverfahren ist es möglich, eine kurze Ansprechzeit der hydrodynamischen Bremse bei vom Fahrer oder einer Steuereinrichtung angefordertem Bremsbedarf zu verwirklichen, ohne dass die Trennkupplung besonders massig ausgeführt werden muss, da es vorteilhaft möglich ist, die hydrodynamische Bremse im entleerten Zustand beziehungsweise im Wesentlichen entleerten Zustand zuzuschalten. Dies wird dadurch erreicht, dass die hydrodynamische Bremse immer dann, wenn das Fahrzeug nicht aktiv im Traktionsbetrieb, in der Regel durch "Gasgeben" seitens des Fahrers, beschleunigt wird, die hydrodynamische Bremse vorsorglich durch Schließen der Trennkupplung, mittels welcher die Bremse zu- oder abschaltbar ist, zugeschaltet wird, so dass nachfolgend das Einstellen eines gewünschten Bremsmomentes bei einer Bremsanforderung für die hydrodynamische Bremse seitens des Fahrers über einen entsprechenden Aktuator, insbesondere Bremshebel im Führerhaus beziehungsweise am Lenkrad oder eine in der Regel elektronische Steuervorrichtung, insbesondere Geschwindigkeitsregelvorrichtung, nur noch durch Befüllen des Arbeitsraums der hydrodynamischen Bremse mit Arbeitsmedium bis zu einem gewünschten Füllungsgrad erfolgen muss. Allgemein ist es gemäß dem erfindungsgemäßen Steuerverfahren unerheblich, ob der Antriebsmotor des Kraftfahrzeugs über ein Fußpedal, einen Hebel oder einen anderen Aktuator betrieben wird, das heißt die Leistungsabgabe durch das Fußpedal - beispielsweise, wie bekannt durch Herunterdrücken, um Gas zu geben -, durch den Hebel oder einen anderen Aktuator, beispielsweise einen Drehschalter, geregelt wird. Entscheidend ist nur, dass im Betriebszustand mit Traktionsbetrieb, bei welchem durch Betätigen des Antriebsmotors beziehungsweise durch Gasgeben eine Leistungseinspeisung von dem Antriebsmotor in den Kraftfahrzeugantriebsstrang mit einer Drehzahl des Antriebsmotors oberhalb der Leerlaufdrehzahl bewirkt wird, um das Fahrzeug aktiv zu beschleunigen beziehungsweise anzutreiben, ein Zuschalten des Retarders, wenn möglich, vermieden wird, wohingegen im übrigen beziehungsweise einem zweiten Betriebszustand, nämlich im Leerlaufbetrieb oder im Schubbetrieb, das heißt, der Antriebsmotor läuft mit Leerlaufdrehzahl um oder wird bei umgekehrtem Leistungsfluss durch die Antriebsräder des Kraftfahrzeugs beschleunigt, die hydrodynamische Bremse vorsorglich, sozusagen in einen Stand-by-Zustand, zugeschaltet wird, insbesondere mit vollständig oder weitgehend entleertem Arbeitsraum, durch Schließen der Trennkupplung, mit welchem die hydrodynamische Bremse in eine Triebverbindung mit dem Antriebsmotor und/oder dem Antriebsstrang schaltbar ist.

In der Praxis bedeutet dies, dass immer dann, wenn der Fahrer, beispielsweise nachdem er mit seinem Fahrzeug über eine Bergkuppe hinweg gefahren ist, vom Gas geht, und somit eine Bremsanforderung für die hydrodynamische Bremse in nächster Zeit mit einer gewissen Wahrscheinlichkeit zu erwarten ist, die hydrodynamische Bremse schonmal in eine Triebverbindung mit dem Antriebsmotor beziehungsweise dem Kraftfahrzeugantriebsstrang geschaltet wird, so dass der Rotor und der Stator beziehungsweise der Gegenlaufrotor in eine geeignete Relativbewegung zueinander versetzt werden, bevor dann, bei der tatsächlichen Bremsanforderung, Arbeitsmedium bis zu einem gewünschten Füllungsgrad, insbesondere bis zur Vollfüllung, in den Arbeitsraum eingebracht wird. Die Bremsanforderung kann dabei sowohl durch den Fahrer getätigt werden, mittels eines geeigneten Bremsaktuators, oder auch durch eine in der Regel elektronische Steuervorrichtung, beispielsweise einer

Geschwindigkeitsregelanlage oder Abstandsregelanlage.

Die erfindungsgemäße Lösung ist bei Retardem mit einem nicht umlaufenden Stator und einem einzigen umlaufenden Rotor anwendbar. Bei dieser Ausführung kann über das Schließen der Trennkupplung entweder der zuvor nicht angetriebene Rotor in Umlauf versetzt werden, indem er in eine Triebverbindung mit dem Antriebsmotor beziehungsweise dem Kraftfahrzeugantriebsstrang geschaltet wird. Gemäß einer alternativen Ausführungsform kann jedoch auch der Rotor stets in der entsprechenden Triebverbindung gehalten werden, so dass er stets von dem Antriebsmotor beziehungsweise dem Kraftfahrzeugantriebsstrang angetrieben wird, und beim Schließen der Trennkupplung das zuvor mit dem Rotor frei umlaufende Schaufelrad des Stators abgebremst und festgesetzt werden, um die hydrodynamische Bremsfunktion zu erreichen.

Bei einer Ausführungsform mit einem sogenannten Gegenlaufretarder, in welchem die beiden Rotoren im Bremsbetrieb entgegengesetzt zueinander umlaufend angetrieben werden, kann entweder einer der beiden Rotoren durch Schließen der Trennkupplung und somit durch Schalten des entsprechenden Rotors in eine Triebverbindung mit dem Antriebsmotor beziehungsweise dem Kraftfahrzeugantriebsstrang in die gewünschte angetriebene Drehbewegung versetzt werden, wohingegen der zweite, entgegengesetzt angeordnete Rotor stets bereits in die entgegengesetzte Drehrichtung umläuft, angetrieben mittels einer geeigneten Triebverbindung, oder beide Rotoren können erst durch Schließen der Trennkupplung und Verbinden der Rotoren in einer Triebverbindung mit dem Antriebsmotor oder dem Kraftfahrzeugantriebsstrang in Umlauf versetzt werden, jedoch mit relativ zueinander entgegengesetzter Drehrichtung.

Besonders vorteilhaft wird die Trennkupplung automatisch, ungeachtet davon, ob zwischenzeitlich ein Bremsbetrieb mit der hydrodynamischen Bremse stattgefunden hat oder nicht, immer dann geöffnet, wenn der Antriebsmotor beziehungsweise das Fahrzeug wieder aktiv beschleunigt beziehungsweise angetrieben wird, das heißt von dem Fahrer oder der Steuervorrichtung in den Traktionsbetrieb gebracht wird. Um ein zu häufiges Schließen und Öffnen der Trennkupplung zu vermeiden, kann das Öffnen vorteilhaft zeitverzögert erfolgen, und zwar immer erst dann, wenn der Traktionsbetrieb länger als eine vorgegebene Zeitspanne, welche beispielsweise zwischen 4, 10, 15 oder 20 Sekunden oder mehr beträgt, beibehalten wurde.

Um ein unerwünschtes Öffnen der Trennkupplung beim Gangwechsel beziehungsweise beim Zwischengasgeben während des Gangwechsels in einem Getriebe zu vermeiden, kann zusätzlich oder alternativ vor dem Öffnen der Trennkupplung geprüft werden, ob eine Kupplung, insbesondere Reibkupplung, in einer Triebverbindung zwischen dem Antriebsmotor und dem Kraftfahrzeugantriebsstrang, insbesondere zwischen dem Antriebsmotor und einem Schaltgetriebe im Kraftfahrzeugantriebsstrang, betätigt wurde, das heißt geöffnet ist. Nur dann, wenn diese Kupplung geschlossen ist, erfolgt das Öffnen der Trennkupplung, mit welcher die hydrodynamische Bremse am Kraftfahrzeugantriebsmotor beziehungsweise am Antriebsstrang angekuppelt ist.

Ferner kann gemäß dem erfindungsgemäßen Verfahren eine Prioritätslogik vorgesehen sein, welche ein Öffnen der Trennkupplung immer dann verhindert, wenn eine Bremsleistungsanforderung für die hydrodynamische Bremse vorliegt, das heißt, wenn mittels dem Bremsaktuator oder der Steuervorrichtung ein Zuschaltbefehl der hydrodynamischen Bremse gegeben wird. Andersherum ausgedrückt erfolgt ein Öffnen der Trennkupplung nur dann, wenn mittels dem Bremsaktuator beziehungsweise der Steuervorrichtung keine Bremsleistung der hydrodynamischen Bremse angefordert wird.

Gemäß einer vorteilhaften Ausführungsform des erfindungsgemäßen Verfahrens kann das automatische Schließen der Trennkupplung zeitverzögert erfolgen, das heißt erst dann, wenn der zweite Betriebszustand - Leerlauf - oder Schubbetrieb - eine vorgegebene Zeitspanne, beispielsweise zwei, drei oder vier Sekunden beibehalten wurde. Damit kann verhindert werden, dass, wenn beispielsweise der Fahrer beim Schaltvorgang in einen höheren Gang während einer Fahrzeugbeschleunigung kurzfristig "vom Gaspedal geht", das heißt die Leistungseinspeisung unterbricht, die hydrodynamische Bremse in den Stand-by-Zustand übergeht. Alternativ kann auch ein Beschleunigungsprofil des Fahrzeugs oder des Antriebmotors berücksichtigt werden, welches auf einen entsprechenden Schaltvorgang in einem Kraftfahrzeugschaltgetriebe oder Automatikgetriebe hinweist. Wenn die aktuelle Beschleunigung mit einem solchen vorgegebenen Beschleunigungsprofil übereinstimmt, kann beispielsweise das Schließen der Trennkupplung unterbunden bzw. ausgesetzt werden.

Gemäß einer Ausführungsform kann das Schließen der Trennkupplung und/oder das Öffnen der Trennkupplung manuell ausgelöst werden, so dass der Fahrer einen aktiven Einfluss hierauf nehmen kann.

Die Erfindung soll nachfolgend anhand eines Ausführungsbeispiels und der Figur exemplarisch beschrieben werden.

Es zeigen:
- Figur 1: eine schematische Darstellung eines Kraftfahrzeugs zur Verwendung eines erfindungsgemäßen Verfahrens;
- Figur 2: ein Ablaufdiagramm einer möglichen Ausführungsform des erfindungsgemäßen Verfahrens.

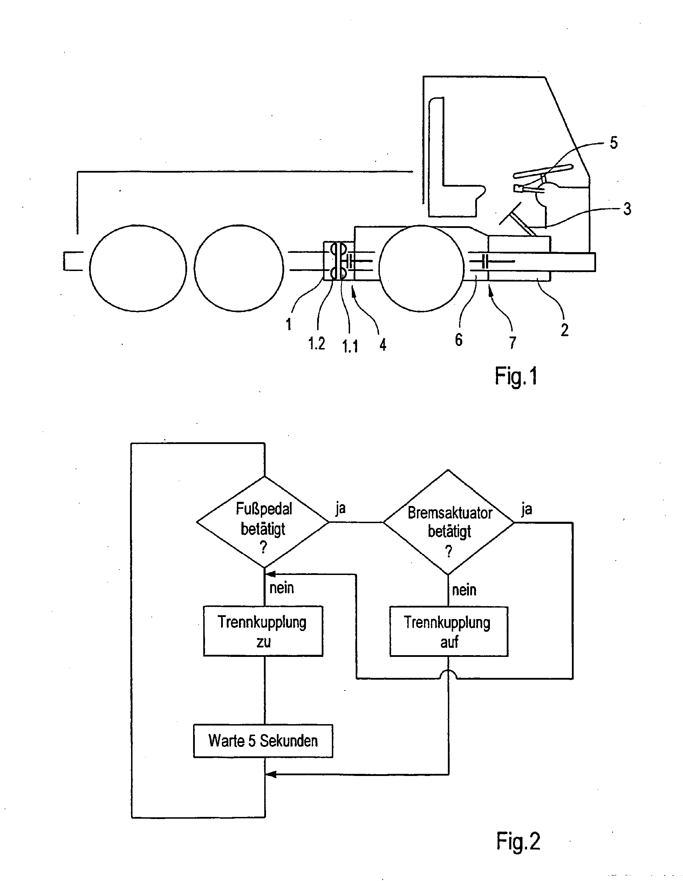

In der Figur 1 erkennt man ein Fahrzeug, umfassend einen Antriebsmotor 2, ein Getriebe 6 und eine getriebeabtriebsseitig angeordnete hydrodynamische Bremse 1. Die hydrodynamische Bremse 1 ist somit ein sogenannter Sekundärretarder.

Die Leistungsabgabe des Antriebsmotors 2 ist über ein Fußpedal 3 regelbar. Je tiefer das Fußpedal 3 nach unten gedrückt wird, desto mehr Kraftstoff wird in dem Antriebsmotor 2, der als Verbrennungsmotor ausgeführt ist, eingespritzt und damit die Leistungsabgabe des Antriebsmotors 2 über eine Kupplung 7 auf das Getriebe 6 erhöht.

Die hydrodynamische Bremse 1 ist über eine Trennkupplung 4 in eine Triebverbindung mit dem Getriebe 6 und somit mittelbar mit dem Antriebsmotor 2 und dem Kraftfahrzeugantriebsstrang zwischen dem Antriebsmotor 2 und den Antriebsrädern schaltbar und aus dieser Triebverbindung herausnehmbar, indem die Trennkupplung 4 geschlossen oder geöffnet wird. Bei geschlossener Trennkupplung 4 wird der Rotor 1.1 der hydrodynamischen Bremse 1 über eine Getriebeabtriebswelle, beispielsweise einen Hochtrieb, angetrieben, beschleunigt - im befüllten Zustand der Bremse 1 - ein Arbeitsmedium im Arbeitsraum der hydrodynamischen Bremse 1 radial nach außen, das dann in den Stator 1.2 der hydrodynamischen Bremse 1 eintritt und in diesem radial nach innen verzögert wird.

Durch die so ausgebildete Kreislaufströmung von Arbeitsmedium im Arbeitsraum wird Drehmoment vom Rotor 1.1 auf den Stator 1.2 übertragen, was wiederum eine Bremswirkung auf den Rotor 1.1 ausübt. Erfindungsgemäß wird jedoch der Rotor 1.1 der hydrodynamischen Bremse 1 durch Schließen der Trennkupplung 4 auch unter bestimmten Randbedingungen im entleerten Zustand der Bremse 1 beziehungsweise im weitgehend entleerten Zustand der Bremse 1 angetrieben, um die hydrodynamische Bremse 1 sozusagen in den Standby-Betrieb zu versetzen.

Die Bremsleistung der hydrodynamischen Bremse 1 ist über einen Bremsaktuator 5, der von dem Fahrer betätigbar ist, einstellbar, das heißt in einem geschlossenen Regelsystern regelbar oder in einem offenen Steuersystem steuerbar. Alternativ oder zusätzlich kann eine Steuervorrichtung vorgesehen sein, die die Bremsleistung in Abhängigkeit bestimmter Betriebszustände oder Vorgaben regelt, beispielsweise einer Geschwindigkeitsregelanlage oder eine Abstandsregelanlage.

Alternativ zu der gezeigten Darstellung kann die hydrodynamische Bremse 1 auch als Primärretarder ausgeführt sein, das heißt in Richtung der Triebverbindung vom Antriebsmotor 2 zu den Antriebsrädern gesehen vor dem Getriebe 6 beziehungsweise am Getriebeeingang angeordnet sein und mit Motordrehzahl betrieben werden.

Wie in der Figur 2 dargestellt ist, wird die Trennkupplung 4 immer dann geschlossen, wenn der Fahrer das Fußpedal 3 loslässt, das heißt ein Herunterdrücken des Fußpedals 3 beendet. Sie wird anschließend wenigstens fünf Sekunden lang geschlossen gehalten.

Wenn der Fahrer das Fußpedal 3 betätigt, das heißt herunterdrückt, um Gas zu geben, wird zunächst geprüft, ob der Bremsaktuator 5 betätigt ist oder eine Steuereinrichtung eine Bremsanforderung an die hydrodynamische Bremse 1 sendet (nicht dargestellt). Wenn dies der Fall ist, wird die Trennkupplung 4 geschlossen beziehungsweise geschlossen gehalten. Wenn nicht, wird die Trennkupplung 4 geöffnet.

Obwohl dies nicht dargestellt ist, kann alternativ oder zusätzlich zu dem Abwarten einer bestimmten Zeitspanne, bis die Trennkupplung 4 frühestens wieder geöffnet werden kann, der Schaltzustand der Kupplung 7 zwischen dem Antriebsmotor 2 und dem Getriebe 6 herangezogen werden. Wenn nämlich diese Kupplung 7 geöffnet wird und insbesondere die Trennkupplung in einer bestimmten Zeitspanne, beispielsweise von weniger als drei Sekunden, zuvor geschlossen worden ist, wird nachfolgend die Trennkupplung 4 geschlossen gehalten, auch wenn der Fahrer das Fahrpedal 3 betätigt, zum Beispiel um Zwischengas zu geben.

Gemäß einer Ausführungsform können eine Fehlererkennung und eine Sicherheitseinrichtung vorgesehen werden, wobei letztere die Trennkupplung 4 immer dann schließt, wenn ein sicherheitsrelevanter Fehler im Bremssystem des Fahrzeugs oder einem anderen vorgegebenen System erkannt wird. Hierzu können geeignete Sensoren (nicht dargestellt) vorgesehen sein, welche vorbestimmte Betriebszustände erfassen und bei Abweichungen von vorgegebenen Referenzwerten ein Schließen der Trennkupplung 4 automatisch veranlassen. Ferner kann ein entsprechender Fehlereintrag in einem vorgesehenen Fehlerspeicher erzeugt werden oder eine optische und/oder akustische Wammeldung an den Fahrer des Fahrzeugs ausgegeben werden.

## Patentansprüche

1. Verfahren zum Steuern einer hydrodynamischen Bremse (1) in einem Kraftfahrzeug mit einem Antriebsmotor (2), dessen Leistungsabgabe über ein Fußpedal (3), einen Hebel oder einen anderen Aktuator zwischen einem ersten Betriebszustand, einem Traktionsbetrieb mit Leistungseinspeisung des Antriebsmotors (2) in einen Kraftfahrzeugantriebsstrang mit einer Drehzahl oberhalb einer Leerlaufdrehzahl des Antriebsmotors (2) zur Beschleunigung des Kraftfahrzeugs und
einem zweiten Betriebszustand, einem Leerlauf- oder Schubbetrieb mit Leerlaufdrehzahl oder oberhalb von dieser jedoch ohne Leistungseinspeisung zur Beschleunigung des Kraftfahrzeugs regelbar ist, wobei
ein Rotor (1.1) der hydrodynamischen Bremse (1) über eine Trennkupplung (4) in eine Triebverbindung mit dem Antriebsmotor (2) und/oder dem Kraftfahrzeugantriebsstrang schaltbar ist und
die hydrodynamische Bremse (1) mit einem Arbeitsmedium befüllbar ist, um eine Bremsleistung auf den Kraftfahrzeugantriebsstrang und/oder den Antriebsmotor (2) auszuüben, und die eingestellte Bremsleistung wenigstens mittelbar über einen Bremsaktuator (5) oder eine Steuervorrichtung steuerbar oder regelbar ist,
**dadurch gekennzeichnet, dass**
immer dann, wenn von dem ersten Betriebszustand der Antriebsmotor (2) mittels dem Fußpedal (3), dem Hebel oder Aktuator in den zweiten Betriebszustand geschaltet wird, die Trennkupplung (4) automatisch geschlossen wird.

2. Verfahren zum Steuern einer hydrodynamischen Bremse (1) in einem Kraftfahrzeug mit einem Antriebsmotor (2), dessen Leistungsabgabe über ein Fußpedal (3), einen Hebel oder einen anderen Aktuator zwischen einem ersten Betriebszustand, einem Traktionsbetrieb mit Leistungseinspeisung des Antriebsmotors (2) in einen Kraftfahrzeugantriebsstrang mit einer Drehzahl oberhalb einer Leerlaufdrehzahl des Antriebsmotors (2) zur Beschleunigung des Kraftfahrzeugs und
einem zweiten Betriebszustand, einem Leerlauf- oder Schubbetrieb mit Leerlaufdrehzahl oder oberhalb von dieser jedoch ohne Leistungseinspeisung zur Beschleunigung des Kraftfahrzeugs regelbar ist, wobei
die hydrodynamische Bremse (1) einen Rotor (1.1) und einen Stator (1.2) aufweist, der Rotor (1.1) von dem Antriebsmotor (2) oder dem Fahrzeugantriebsstrang angetrieben wird, und
der Stator (1.2) in einem geöffneten Zustand einer vorgesehenen Trennkupplung (4) frei in der hydrodynamischen Bremse (1) umläuft und bei geschlossener Trennkupplung (4) ortsfest gehalten wird, und
die hydrodynamische Bremse (1) mit einem Arbeitsmedium befüllbar ist, um eine Bremsleistung auf den Kraftfahrzeugantriebsstrang und/oder den Antriebsmotor (2) auszuüben, und die eingestellte Bremsleistung wenigstens mittelbar über einen Bremsaktuator (5) oder eine Steuervorrichtung steuerbar oder regelbar ist,
**dadurch gekennzeichnet, dass**
immer dann, wenn von dem ersten Betriebszustand des Antriebsmotors (2) mittels dem Fußpedal (3), dem Hebel oder Aktuator in den zweiten Betriebszustand geschaltet wird, der Stator (1.2) durch Schließen der Trennkupplung (4) automatisch festgesetzt wird.

3. Verfahren gemäß einem der Ansprüche 1 oder 2, **dadurch gekennzeichnet, dass** die Trennkupplung (4) automatisch dann geöffnet wird, wenn der Antriebsmotor (2) mittels dem Fahrpedal (3), dem Hebel oder Aktuator aus dem zweiten in den ersten Betriebszustand geschaltet wird.

4. Verfahren gemäß Anspruch 3, **dadurch gekennzeichnet, dass** das Öffnen erst dann zeitverzögert erfolgt, wenn der zweite Betriebszustand wenigstens eine vorgegebene Zeitspanne, insbesondere zwischen vier und zehn Sekunden, beibehalten wurde/oder der erste Betriebszustand wenigstens eine vorgegebene Zeitspanne, insbesondere zwischen vier und zehn Sekunden, beibehalten wird.

5. Verfahren gemäß einem der Ansprüche 3 oder 4, **dadurch gekennzeichnet, dass** das Öffnen nur dann erfolgt, wenn zugleich eine Kupplung (7), die in einer Triebverbindung zwischen dem Antriebsmotor (2) und dem Kraftfahrzeugantriebsstrang, insbesondere zwischen dem Antriebsmotor (2) und einem Schaltgetriebe im Kraftfahrzeugantriebsstrang, angeordnet ist, geschlossen ist.

6. Verfahren gemäß einem der Ansprüche 3 bis 5, **dadurch gekennzeichnet, dass** das Öffnen nur dann erfolgt, wenn mittels dem Bremsaktuator (5) oder der Steuervorrichtung keine Bremsleistung der hydrodynamischen Bremse (1) angefordert wird.

7. Verfahren gemäß einem der Ansprüche 3 bis 6, **dadurch gekennzeichnet, dass** vor dem Öffnen der Trennkupplung (4) die hydrodynamische Kupplung (1) von Arbeitsmedium entleert oder im wesentlichen entleert wird.

8. Verfahren gemäß einem der Ansprüche 1 bis 7, **dadurch gekennzeichnet, dass** das automatische Schließen der Trennkupplung (4) bei von Arbeitsmedium entleerter oder im wesentlichen entleerter hydrodynamischer Bremse (1) erfolgt.

9. Verfahren gemäß Anspruch 1 und insbesondere einem der Ansprüche 3 bis 8, **dadurch gekennzeichnet, dass** der Rotor (1.1) der hydrodynamischen Bremse (1) durch Schließen der Trennkupplung (4) als einziger Rotor (1.1) der hydrodynamischen Bremse (1) von dem Antriebsmotor (2) und/oder dem Kraftfahrzeugantriebsstrang angetrieben wird.

10. Verfahren gemäß Anspruch 1 und insbesondere einem der Ansprüche 3 bis 8, **dadurch gekennzeichnet, dass** die hydrodynamische Bremse (1) zwei Rotoren (1.1) aufweist, welche bei geschlossener Trennkupplung (4) in ihrer Drehrichtung entgegengesetzt zueinander angetrieben werden, und durch Öffnen der Trennkupplung (4) einer oder beide Rotoren (1.1) aus der Triebverbindung mit dem Antriebsmotor (2) und/oder dem Fahrzeugantriebsstrang herausgeschaltet wird.

11. Verfahren gemäß einem der Ansprüche 1 bis 10, **dadurch gekennzeichnet, dass** das automatische Schließen der Trennkupplung (4) zeitverzögert erfolgt, wenn der zweite Betriebszustand wenigstens eine vorbestimmte Zeitspanne, insbesondere zwischen zwei und zehn Sekunden, beibehalten wurde.

12. Verfahren gemäß einem der Ansprüche 1 bis 10, **dadurch gekennzeichnet, dass** das automatische Schließen der Trennkupplung (4) in Abhängigkeit eines Beschleunigungsprofils des Antriebmotors (2) oder des Kraftfahrzeugs erfolgt, wobei das Schließen der Trennkupplung (4) dann ausgesetzt wird, wenn das aktuelle Beschleunigungsprofil auf eine Unterbrechung des ersten Betriebszustands aufgrund eines Schaltens eines Kraftfahrzeugschaltgetriebes in einen höheren Gang mit größerer Übersetzung hinweist.

13. Verfahren gemäß einem der Ansprüche 1 bis 12, **dadurch gekennzeichnet, dass** das Schließen und/oder Öffnen der Trennkupplung (4) manuell auslösbar ist.

## Claims

1. A method for controlling a hydrodynamic brake (1) in a motor vehicle fitted with a drive motor (2),whose power output can be regulated by means of a foot pedal (3), a lever or another actuator between a first operating mode, a traction operation with power being supplied to the drive motor (2)in a motor vehicle drive train at a speed above an idling speed of the drive motor (2) for accelerating the motor vehicle and a second operating mode, an idling mode or overrun condition at an idling speed or above said speed however without power feed for accelerating the motor vehicle,
wherein a rotor (1.1) of the hydrodynamic brake (1) can be switched via a separation clutch (4) into a drive connection with the drive motor (2) and/or the motor vehicle drive train and the hydrodynamic brake (1) can be filled with a working fluid, to exert a breaking force on the motor vehicle drive train and/or the drive motor (2), and the adjusted breaking force can be controlled or regulated at least indirectly via a brake actuator (5) or a control device,
**characterised in that** the separation clutch (4) is closed automatically whenever in the first operating mode the drive motor is switched to the second operating mode by means of the foot pedal (3), the lever or actuator.

2. A method for controlling a hydrodynamic brake (1) in a motor vehicle fitted with a drive motor (2), whose power output can be regulated by means of a foot pedal (3), a lever or another actuator between a first operating mode, a traction operation with power being supplied to the drive motor (2) in a motor vehicle drive train at a speed above an idling speed of the drive motor (2) for accelerating the motor vehicle and a second operating mode, an idling mode or overrun condition at an idling speed or above said speed however without power feed for accelerating the motor vehicle, wherein the hydrodynamic brake (1) includes a rotor (1.1) and a stator (1.2), the rotor (1.1) is driven by the drive motor (2) or the vehicle drive train, and the stator (1.2) rotates freely in the hydrodynamic brake (1) in an open condition of a provided separation clutch (4) and is maintained fixedly when the separation clutch (4) is closed, and the hydrodynamic brake (1) can be filled with a working fluid, to exert a breaking force on the motor vehicle drive train and/or the drive motor (2), and the adjusted breaking force can be controlled or regulated at least indirectly via a brake actuator (5) or a control device, **characterised in that** the stator (1.2) is locked automatically by closing the separation clutch (4) whenever in the first operating mode the drive motor is switched to the second operating mode by means of the foot pedal (3), the lever or actuator.

3. A method according to one of the claims 1 or 2, **characterised in that** the separation clutch (4) is then opened automatically when the drive motor (2) is switched from the second to the first operating mode by means of the accelerator pedal (3), lever or actuator.

4. A method according to claim 3, **characterised in that** opening of the separation clutch is only time delayed when the second operating mode has been maintained at least for a preset time span, in particular between four and ten seconds /or the first operating mode is maintained at least for a preset time span, in particular between four and ten seconds.

5. A method according to one of the claims 3 or 4, **characterised in that** opening is then only possible when at the same time a clutch (7), which is arranged in a drive connection between the drive motor (2) and the motor vehicle drive train, in particular between the drive motor (2) and a manual transmission in the motor vehicle drive train, is closed.

6. A method according to any of the claims 3 to 5, **characterised in that** opening is then only possible if no breaking force of the hydrodynamic brake (1) is required by means of the brake actuator (5) or the control device.

7. A method according to any of the claims 3 to 6, **characterised in that** before opening the separation clutch (4) the hydrodynamic clutch (1) is emptied or substantially emptied of the working fluid.

8. A method according to any of the claims 1 to 7, **characterised in that** automatic closing of the separation clutch (4) takes place with a hydrodynamic brake (1) emptied or substantially emptied of the working fluid.

9. A method according to claim 1 and in particular one of claims 3 to 8, **characterised in that** the rotor (1.1) of the hydrodynamic brake is driven by the drive motor (2) and/or the motor vehicle drive train, by closing the separation clutch (4) as the single rotor (1.1) of the hydrodynamic brake (1).

10. A method according to claim 1 and in particular one of claims 3 to 8, **characterised in that** the hydrodynamic brake (1) includes two rotors (1.1), which are driven in opposite rotation direction to one another when the separation clutch (4) is closed, and one or both rotors (1.1) is released from the drive connection with the drive motor (2) and/or the vehicle drive train by opening the separation clutch (4).

11. A method according to any of the claims 1 to 10, **characterised in that** automatic closing of the separation clutch (4) is time delayed when the second operating mode has been maintained at least for a preset time span, in particular between two and ten seconds.

12. A method according to any of the claims 1 to 10, **characterised in that** automatic closing of the separation clutch (4) takes place according to an acceleration profile of the drive unit (2) or of the motor vehicle, wherein closing the separation clutch (4) is then disabled, when the current acceleration profile points out to an interruption of the first operating mode due to switching a motor vehicle manual transmission to a higher gear with greater gear ratio.

13. A method according to any of the claims 1 to 12, **characterised in that** closing and/or opening the separation clutch (4) can be triggered manually.

## Revendications

1. Procédé de commande d'un frein hydrodynamique (1) dans un véhicule automobile pourvu d'un moteur d'entraînement (2), dont la puissance de sortie peut être régulée par le biais d'une pédale à pied (3), d'un levier ou d'un autre actionneur entre un premier mode d'exploitation, un mode traction avec alimentation en puissance du moteur d'entraînement (2) dans un train d'entraînement de véhicule automobile à une vitesse de rotation supérieure à une vitesse au ralenti du moteur d'entraînement (2) pour accélérer le véhicule automobile et un second mode d'exploitation, un ralenti ou surrégime avec une vitesse au ralenti ou supérieure à celle-ci sans alimentation en puissance pour accélérer le véhicule automobile, dans lequel un rotor (1.1) du frein hydrodynamique (1) peut être commuté par le biais d'un embrayage de séparation (4) en liaison motrice avec le moteur d'entraînement (2) et/ou le train d'entraînement de véhicule automobile et le frein hydrodynamique (1) peut être rempli d'un fluide de travail, pour exercer une puissance de freinage sur le train d'entraînement de véhicule automobile et/ou le moteur d'entraînement (2), et l'on peut contrôler ou régler la puissance de freinage définie au moins indirectement par le biais d'un actionneur de frein (5) et d'un dispositif de commande, **caractérisé en ce que** l'embrayage de séparation (4) est fermé automatiquement à chaque fois que le moteur d'entraînement (2) passe du premier mode d'exploitation au second mode d'exploitation à l'aide de la pédale à pied (3), du levier ou de l'actionneur.

2. Procédé de commande d'un frein hydrodynamique (1) dans un véhicule automobile pourvu d'un moteur d'entraînement (2), dont la puissance de sortie peut être régulée par le biais d'une pédale à pied (3), d'un levier ou d'un autre actionneur entre un premier mode d'exploitation, un mode traction avec alimentation en puissance du moteur d'entraînement (2) dans un train d'entraînement de véhicule automobile à une vitesse de rotation supérieure à une vitesse au ralenti du moteur d'entraînement (2) pour accélérer le véhicule automobile et un second mode d'exploitation, un ralenti ou surrégime avec une vitesse au ralenti ou supérieure à celle-ci sans alimentation en puissance pour accélérer le véhicule automobile, tandis que le frein hydrodynamique (1) présente un rotor (1.1) et un stator (1.2), le rotor (1.1) est entraîné par le moteur d'entraînement (2) ou le train d'entraînement de véhicule, et le stator (1.2) tourne sans encombres dans le frein hydrodynamique (1) lorsqu'un embrayage de séparation (4) prévu est ouvert et est maintenu fixé à demeure avec l'embrayage de séparation (4) fermé, et le frein hydrodynamique (1) peut être rempli d'un fluide de travail, pour exercer une puissance de freinage sur le train d'entraînement de véhicule automobile et/ou le moteur d'entraînement (2), et l'on peut contrôler ou régler la puissance de freinage définie au moins indirectement par le biais d'un actionneur de frein (5) et d'un dispositif de commande, **caractérisé en ce que** le stator (1.2) est verrouillé automatiquement par la fermeture de l'embrayage de séparation (4) à chaque fois que le moteur d'entraînement (2) passe du premier mode d'exploitation au second mode d'exploitation à l'aide de la pédale à pied (3), du levier ou de l'actionneur.

3. Procédé selon l'une des revendications 1 à 2, **caractérisé en ce que** l'embrayage de séparation (4) s'ouvre alors automatiquement lorsque le moteur d'entraînement (2) passe du second en premier mode d'exploitation à l'aide de la pédale d'accélérateur (3), du levier et de l'actionneur.

4. Procédé conforme à la revendication 3 **caractérisé en ce que** l'ouverture de l'embrayage de séparation n'est temporisée que si le second mode d'exploitation a été maintenu au moins pendant un laps de temps prédéterminé, en particulier entre quatre et dix secondes ou le premier mode d'exploitation est maintenu au moins pendant un laps de temps prédéterminé, en particulier entre quatre et dix secondes.

5. Procédé selon l'une des revendications 3 à 4, **caractérisé en ce** l'ouverture ne se produit que si un embrayage (7) en liaison motrice entre le moteur d'entraînement (2) et le train d'entraînement de véhicule automobile, en particulier entre le moteur d'entraînement (2) et un engrenage de changement de vitesse dans le train d'entraînement de véhicule automobile, est fermé simultanément.

6. Procédé selon l'une des revendications 3 à 5, **caractérisé en ce que** l'ouverture ne se produit que si aucune puissance de freinage du frein hydrodynamique (1) n'est sollicitée par le biais de l'actionneur de frein (5) ou du dispositif de commande.

7. Procédé selon l'une des revendications 3 à 6, **caractérisé en ce qu'**avant d'ouvrir l'embrayage de séparation (4), l'embrayage hydrodynamique (1) est vidé ou sensiblement vidé du fluide de travail.

8. Procédé selon l'une des revendications 1 à 7, **caractérisé en ce que** la fermeture automatique de l'embrayage de séparation (4) se produit avec un frein hydrodynamique (1) vidé ou sensiblement vidé du fluide de travail.

9. Procédé selon la revendication 1 et en particulier l'une des revendications 3 à 8, **caractérisé en ce que** le rotor (1.1) du frein hydrodynamique (1) est entraîné par le moteur d'entraînement (2) et/ou le train d'entraînement de véhicule automobile, par la fermeture de l'embrayage de séparation (4) comme unique rotor (1.1) du frein hydrodynamique (1).

10. Procédé selon la revendication 1 et en particulier l'une des revendications 3 à 8, **caractérisé en ceque** le frein hydrodynamique (1) présente deux rotors (1.1), qui sont entraînés dans des sens de rotation opposés l'un à l'autre avec l'embrayage de séparation (4) fermé et qu'un rotor (1.1) ou les deux est dégagé de la liaison motrice avec le moteur d'entraînement (2) et/ou le train d'entraînement de véhicule par ouverture de l'embrayage de séparation (4).

11. Procédé selon l'une des revendications 1 à 10, **caractérisé en ce** la fermeture automatique de l'embrayage de séparation (4) est temporisée si le second mode d'exploitation a été maintenu au moins pendant un laps de temps prédéterminé, en particulier entre deux et dix secondes.

12. Procédé selon l'une des revendications 1 à 10, **caractérisé en ce que** la fermeture automatique de l'embrayage de séparation (4) est fonction d'un profil d'accélération du moteur entraînement (2) ou du véhicule automobile, tandis que la fermeture de l'embrayage de séparation (4) est alors inhibée lorsque le profil d'accélération courant renvoie à une interruption du premier mode d'exploitation, provoquée par le passage à une vitesse supérieure avec un rapport de transmission plus élévé grâce à une transmission manuelle de véhicule automobile.

13. Procédé selon l'une des revendications 1 à 12, **caractérisé en ce que** la fermeture et/ou l'ouverture de l'embrayage de séparation (4) peut être déclenché manuellement.
